# EUROPÄISCHE PATENTSCHRIFT

(11) **EP 4 158 147 B1**
(45) Veröffentlichungstag und Bekanntmachung des Hinweises auf die Patenterteilung: **10.12.2025**
(21) Anmeldenummer: 21729441.2
(22) Anmeldetag: 25.05.2021
(51) Int. Cl.: F16L 1/028, F16L 1/06, E21B 29/10, F16L 55/165, E21B 29/00

(54) **OSZILLIERENDES FRÄSWERKZEUG UND VERFAHREN ZUM ENTFERNEN EINES IM ERDREICH VERLEGTEN ROHRS**
OSCILLATING MILLING TOOL, AND METHOD FOR REMOVING A PIPE LAID IN THE GROUND
OUTIL DE BROYAGE OSCILLANT ET PROCÉDÉ DE RETRAIT D'UN TUYAU POSÉ DANS LE SOL

(30) Priorität: 27.05.2020 DE 102020206603
(43) Veröffentlichungstag der Anmeldung: 05.04.2023
(73) Patentinhaber: DE Handwarkers GmbH, 40789 Monheim am Rhein (DE)
(72) Erfinder: UDEN, Marcel, 42655 Solingen (DE); GAUSMANN, Felix, 49205 Hasbergen (DE)
(74) Vertreter: Gille Hrabal Partnerschaftsgesellschaft mbB Patentanwälte
(86) Internationale Anmeldenummer: PCT/EP2021/063819
(87) Internationale Veröffentlichungsnummer: WO 2021/239691

(56) Entgegenhaltungen:
- EP-A1- 0 053 480
- EP-A1- 3 617 437
- JP-A- H 094 373
- US-A1- 2017 183 930

## Beschreibung

Die Erfindung betrifft ein Fräswerkzeug, eine Fräseinheit, eine Fräseinrichtung sowie ein Verfahren zum Entfernen eines im Erdreich verlegten Rohrs.

Das Rohr kann beispielsweise ein Gasrohr, ein Wasserrohr, ein Abwasserrohr oder ein Rohr für Datenleitungen sein. Das Rohr kann aus einem Kunststoff wie z. B. PVC, PE oder PET bestehen.

Ist ein in einem Erdreich befindliches Rohr defekt, so muss es ausgetauscht werden. Das defekte Rohr wird dafür zunächst entfernt. Im Anschluss daran wird ein neues Rohr verlegt.

Um Beschädigungen von benachbart verlegten Rohren oder sonstigen Installationen in einem Untergrund zu vermeiden und um den Platzbedarf nicht zu verändern, soll ein defektes Rohr entfernt werden können, ohne die an das defekte Rohr angrenzende Umgebung beeinträchtigen zu müssen. Dies kann erreicht werden, indem ein defektes Rohr durch ein rotierendes Werkzeug zerkleinert wird. Dies wird als Fräsen bezeichnet und die dafür genutzten Werkzeuge können ebenso als Fräsen bezeichnet werden. Durch eine Flüssigkeit können durch Fräsen zerkleinerte Bestandteile des defekten Rohrs abtransportiert werden.

Ein im Erdreich verlegtes Kunststoffrohr kann durch Fräsen entfernt werden, indem zunächst eine Startgrube und eine Zielgrube freigelegt werden, um so Zugänge zu einem Abschnitt eines im Erdreich verlegten Kunststoffrohrs zu schaffen. Dieser Abschnitt des zu entfernenden Kunststoffrohrs kann anschließend durch Fräsen und Spülen mithilfe eines Horizontal-Bohrgeräts entfernt werden.

Die Druckschrift EP 3 617 437 A1 beschreibt einen Kegelfräser zum Entfernen eines im Erdreich verlegten Kunststoffrohrs, der mit einem rotierenden Bohrgestänge zusammenwirkt und zum Zerspanen des Rohrs in dieses eingefahren wird. Der Kegelfräser umfasst ein Zerkleinerungswerkzeug für die abgeschälten Späne. Druckschrift JP H09 4373 A offenbart eine Vorrichtung zum Rammen von Rohren oder zum Aufweiten von Pilotbohrungen mit einem Schlagkopf und einem selbstgetriebenen Schlaggerät, das relativ zu dem Schlagkopf axial beweglich ist.

Es ist Aufgabe der Erfindung, verbessert ein Rohr, insbesondere ein Kunststoffrohr, aus einem Erdreich entfernen zu können.

Die Aufgabe wird gelöst durch das Fräswerkzeug gemäß Anspruch 1 sowie durch die Fräseinheit, die Fräseinrichtung und das Verfahren zum Entfernen eines im Erdreich verlegten Rohrs gemäß den nebengeordneten Ansprüchen.

Zur Lösung der Aufgabe dient ein Fräswerkzeug zum Entfernen eines im Erdreich verlegten Rohrs. Dieses umfasst einen um eine Längsachse des Fräswerkzeugs drehbaren Werkzeugträger mit zumindest einem am Werkzeugträger angebrachten Fräselement zum Zerkleinern des Rohrs. Es umfasst weiterhin eine Anschlusseinrichtung zum mechanischen Anschluss des Fräswerkzeugs an eine Bewegungseinrichtung sowie eine Oszillationseinrichtung zur Realisierung oszillierender axialer Bewegungen des Werkzeugträgers in Bezug zur Anschlusseinrichtung.

Durch die oszillierenden axialen Bewegungen kann das Rohr in besonders kleine Teile zerkleinert werden, was einen sicheren Abtransport der Teile ermöglicht und somit einen störungsfreien Betrieb des Fräswerkzeugs gewährleistet. Mit anderen Worten wird zusätzlich zur Vorwärtsbewegung entlang der Vorschubrichtung periodisch ein Rückschlag erzeugt, bei dem der Werkzeugträger ein Stück zurück transportiert wird.

Zum Entfernen des Rohrs wird das Fräswerkzeug so in das Rohr eingebracht, dass seine Längsachse parallel zur Längsachse des Rohrs bzw. bei gekrümmten Rohren des derzeitigen Rohrabschnitts ausgerichtet ist. Das gesamte Fräswerkzeug inklusive Werkzeugträger kann um seine Längsachse drehbar sein. Alternativ kann der Werkzeugträger in Bezug zu weiteren Elementen des Fräswerkzeugs drehbar sein. Durch die Drehung des Werkzeugsträgers gegenüber dem Rohr und insbesondere die gleichzeitige Vorwärtsbewegung entlang der Längsachse, auch als Vorschub bezeichnet, zerkleinert das zumindest eine Fräselement das Rohr. Die Längsachse des Werkzeugträgers entspricht typischerweise der Längsachse des Fräswerkzeugs. Das Fräswerkzeug kann auch als Fräskopf bezeichnet werden.

Der Werkzeugträger ist eine Einrichtung zur Aufnahme zumindest eines Fräselements. Das Fräselement kann auch als Messer bezeichnet werden und der Werkzeugträger kann auch als Messerträger bezeichnet werden. Typischerweise ist eine Vielzahl an Fräselementen in Umfangsrichtung verteilt und/oder in Längsrichtung verteilt am Werkzeugträger angebracht. Der Werkzeugträger und/oder ein Zentrierkopf des Fräswerkzeugs besteht vorzugsweise vollständig oder überwiegend aus Aluminium, um Fertigungsvorteile und Gewichtsvorteile zu erzielen. Das Aluminium wird vorzugsweise eloxiert, um einen verbesserten Korrosionsschutz zu erzielen. Das Fräselement besteht vorzugsweise aus Stahl, insbesondere gehärtetem und/oder nitriertem Stahl, beispielsweise aus 80MnV8.

Das Fräselement schneidet Stücke beispielsweise in Form von Spänen aus dem zu entfernenden Rohr heraus. Im Allgemeinen weist das Fräselement für das Herausschneiden eine scharfe Kante bzw. Klinge auf. Außerdem besteht das Fräselement regelmäßig aus einem gehärteten und/oder nitrierten Stahl. Das Fräselement kann beispielsweise durch zumindest eine Schraube an dem Fräskopf befestigt sein. Es kann dann leicht ausgetauscht werden, etwa wenn das Fräselement stumpf geworden ist. Das Fräselement bzw. die Fräselemente sind an dem Fräskopf so angebracht, dass ein Rohr zerkleinert werden kann, wenn das Fräswerkzeug rotiert und insbesondere vorwärts bewegt wird.

Die mechanische Anschlusseinrichtung des Fräswerkzeugs dient der Vorwärtsbewegung des Fräswerkzeugs. Die mechanische Anschlusseinrichtung ermöglicht eine mechanische Verbindung mit einer Bewegungseinrichtung, die direkt oder indirekt sein kann. Im letzteren Fall kann die Anschlusseinrichtung beispielsweise zum Anschluss an einen Adapter eingerichtet sein, welcher wiederum mit der Bewegungseinrichtung verbindbar ist. Die Anschlusseinrichtung kann zumindest ein Befestigungselement wie beispielsweise ein Gewinde zur Kopplung an die Bewegungseinrichtung oder den Adapter aufweisen. Die Kopplung kann eine drehfeste Kopplung sein.

Insbesondere umfasst das Fräswerkzeug eine radial innen in Bezug zum Werkzeugträger angeordnete Trägerwelle. Diese kann den Werkzeugträger tragen. Der Werkzeugträger ist insbesondere axial verschieblich in Bezug zur Trägerwelle. Die Trägerwelle kann den Werkzeugträger beidseitig axial überragen. Die Anschlusseinrichtung kann als Teil der Trägerwelle ausgebildet sein. Insbesondere ist die Trägerwelle aus Stahl hergestellt, vorzugsweise aus einem gehärteten und/oder nitriertem Stahl, um große Kräfte übertragen zu können. Beispielsweise kann Chrom-Molybdänstahl verwendet werden. Der Stahl kann zwecks Verbesserung des Korrosionsschutzes brüniert werden. Ein solches Material kann auch für Schlagscheiben der Oszillationseinrichtung genutzt werden.

Eine Bewegungseinrichtung ist eine Einrichtung zur Vorwärtsbewegung des Fräswerkzeugs entlang des zu entfernenden Rohrs, beispielsweise ein angetriebenes Bohrgestänge. Insbesondere ist sie zur Drehung der Anschlusseinrichtung eingerichtet.

Die Oszillationseinrichtung dient der Erzeugung axialer oszillierender Relativbewegungen zwischen Werkzeugträger und Anschlusseinrichtung. Mit anderen Worten werden entlang der Längsachse verlaufende translatorische Bewegungen des Werkzeugträgers erzeugt. Axial bezieht sich auf die Längsachse des Fräswerkzeugs. Es ist nicht ausgeschlossen, dass auch weitere Relativbewegungen erzeugt werden. Die Oszillationseinrichtung kann zwischen der Anschlusseinrichtung und dem Fräswerkzeug angeordnet sein. Oszillierende Bewegungen meint abwechselnde Bewegungen in entgegengesetzte Richtungen. Mit anderen Worten wird der Abstand zwischen Werkzeugträger und Anschlusseinrichtung abwechselnd verringert und vergrößert. Auf diese Weise erfolgt die Zerkleinerung des Rohrs stückweise, insbesondere schichtweise, so dass die Größe der gelösten Teile des Rohrs verringert werden kann. Dies ermöglicht einen besseren Abtransport, beispielsweise durch Wegspülen mit einer Spülflüssigkeit. Verstopfungen durch abgetrennte Rohrstücke werden verhindert.

In einer Ausgestaltung ist die Anschlusseinrichtung zum drehfesten Anschluss des Werkzeugträgers an die Bewegungseinrichtung eingerichtet.

Mit anderen Worten kann die Anschlusseinrichtung für einen Betrieb drehfest mit dem Werkzeugträger verbunden werden, so dass bei einem rotierenden Antrieb der Bewegungseinrichtung die Rotationsbewegung über die Anschlusseinrichtung auf den Werkzeugträger übertragen wird. Auf diese Weise kann eine Drehbewegung einer Bewegungseinrichtung wie beispielsweise eines Bohrgestänges auf den Werkzeugträger übertragen werden. Insbesondere weist die Anschlusseinrichtung eine Übertragungseinrichtung zur Übertragung eines Drehmoments auf. Beispielsweise kann die Trägerwelle die Anschlusseinrichtung ausbilden und mittels Keilverzahnung drehfest am Werkzeugträger angeordnet sein.

Dies ermöglicht es, die erfindungsgemäße Lösung besonders einfach und mit verfügbaren Bewegungseinrichtungen zu nutzen. Weiterhin ist der Platzbedarf am Fräswerkzeug so besonders gering, so dass besonders kleine Fräswerkzeuge hergestellt werden können und auch für kleine Rohrdurchmesser geeignete Werkzeuge möglich sind.

In einer Ausgestaltung weist das Fräswerkzeug einen Zentrierkopf zur drehfesten Positionierung im Rohr auf und der Werkzeugträger ist in Bezug zum Zentrierkopf drehbar.

Der Zentrierkopf zentriert das Fräswerkzeug im zu entfernenden Rohr. Er dient somit auch der Vergleichmäßigung der Vorwärtsbewegung und der Stabilisierung des Werkzeugträgers. Insbesondere ist er entlang der Vorschubrichtung das vorderste Element des Fräswerkzeugs. Dies gilt vor allem dann, wenn das Fräswerkzeug während des Betriebs durch die Bewegungseinrichtung geschoben wird. Wird das Fräswerkzeug während des Betriebs durch die Bewegungseinrichtung gezogen, so kann die Anschlusseinrichtung das vorderste Element des Fräswerkzeugs sein.

Für den bestimmungsgemäßen Betrieb wird der Zentrierkopf in das zu entfernende Rohr eingeschoben oder hineingezogen. In Schubrichtung bzw. Zugrichtung gesehen befindet sich der Werkzeugträger dann hinter dem Zentrierkopf. Das gesamte Fräswerkzeug wird vorwärtsbewegt, also weiter in das zu entfernende Rohr hineinbewegt. Der Zentrierkopf wird nicht gedreht. Der Werkzeugträger dreht sich zusätzlich um seine Längsachse.

Insbesondere weist der Zentrierkopf wenigstens ein Leitelement auf. Das Leitelement oder die Leitelemente verlaufen beispielsweise parallel zur Längsachse.

Die Leitelemente können Schneidkanten zur drehfesten Anbindung des Zentrierkopfes im Rohr aufweisen. Diese können das vergleichsweise weichere Material des Rohrs lokal verformen bzw. sich in dieses einschneiden und somit eine Drehung gegenüber dem Rohr verhindern. Typischerweise weisen der Zentrierkopf und/oder die Schneidkanten einen sich von einer Spitze des Zentrierkopfs aus vergrößernden Durchmesser auf. Dies verbessert die Zentrierung des Zentrierkopfes und die Stabilisierung des Fräswerkzeugs im Inneren des Rohrs.

In einer Ausführungsform weist das Fräswerkzeug ein Lager, insbesondere ein zweireihiges Lager, zur Lagerung der Trägerwelle an dem Zentrierkopf auf. Insbesondere ist das Lager ein Wälzlager wie beispielsweise ein Kugellager. Besonders bevorzugt ist ein selbstschmierendes Gleitlager. Die zweireihige Ausführung dient der Aufnahme hoher Kräfte beim Betrieb des Fräswerkzeugs.

In einer Ausgestaltung ist der Werkzeugträger axial verschieblich in Bezug zum Zentrierkopf angeordnet. Die Oszillationseinrichtung ist dazu eingerichtet, aus einer rotatorischen Relativbewegung zwischen dem Werkzeugträger und dem Zentrierkopf die oszillierende Bewegung des Werkzeugträgers in Bezug zum Zentrierkopf zu erzeugen.

Mit anderen Worten kann die Oszillationseinrichtung als Koppelgetriebe ausgestaltet sein, das die relative Rotation in eine translatorische oszillierende Relativbewegung umwandelt. Dieses ist zwischen dem Werkzeugträger und dem Zentrierkopf angeordnet. Durch die mechanische Verbindung der Anschlusseinrichtung mit dem Werkzeugträger kann somit die Oszillationseinrichtung zur Erzeugung oszillierender Bewegungen aus der angetriebenen Rotation eingerichtet sein. Auf diese Weise kann die oszillierende Bewegung besonders einfach und mit robusten und langlebigen Mitteln erzeugt werden.

In einer Ausgestaltung weist die Oszillationseinrichtung zwei einander kontaktierende Oberflächen auf. Diese sind so ausgebildet, dass sich eine relative axiale Position der beiden Oberflächen zueinander in Abhängigkeit einer relativen Drehposition der beiden Oberflächen einstellt.

Mit anderen Worten führt eine veränderte Drehposition zwischen den beiden Oberflächen zu einem veränderten Abstand zwischen dem Zentrierkopf und dem Werkzeugträger. Die Oberflächen sind so geformt und angeordnet, dass der Abstand zwischen dem Zentrierkopf und dem Werkzeugträger von einer relativen Drehposition zwischen den beiden Oberflächen abhängt.

Insbesondere sind die beiden Oberflächen im Wesentlichen senkrecht zur Längsachse angeordnet. Sie können an senkrecht angeordneten Schlagscheiben angeordnet sein. Beispielsweise weisen die Oberflächen eine gewellte Form oder eine Sägezahnform auf. Eine erste Oberfläche ist insbesondere fest mit dem Zentrierkopf verbunden. Eine zweite Oberfläche ist insbesondere fest mit dem Werkzeugträger verbunden. Es werden aufgrund der Drehung unterschiedliche axiale Positionen der beiden Oberflächen eingestellt. Das meint insbesondere unterschiedliche Abstände jeweils festgelegter Punkte der beiden Oberflächen entlang der axialen Richtung.

Bei bestimmungsgemäßem Betrieb des Fräswerkzeugs steht die erste Oberfläche fest, während die zweite Oberfläche rotiert. Durch die Formen der Oberflächen werden durch diese relative Drehbewegung die oszillierenden axialen Bewegungen erzeugt. Dies stellt eine besonders einfache Möglichkeit zur Erzeugung der oszillierenden Bewegungen dar.

In einer Ausgestaltung weist das Fräswerkzeug eine Federeinrichtung zum Aneinanderdrücken der beiden Oberflächen auf.

Die Federeinrichtung übt eine Federkraft aus, die die beiden Oberflächen aneinanderdrückt. Die Federeinrichtung ist beispielsweise zur Kraftausübung auf eine der Oberflächen eingerichtet und an der anderen Oberfläche gelagert. Die Federkraft hat zumindest eine axiale Komponente. Insbesondere übt die Federeinrichtung eine axial ausgerichtete Druckkraft von außen auf eine der Oberflächen bzw. ein mit der Oberfläche verbundenes Element auf. Die Federeinrichtung kann eine oder mehrere Federelemente wie beispielsweise Spiralfedern oder Tellerfedern aufweisen. Die Federeinrichtung kann auch als Federpaket bezeichnet werden.

Die Federeinrichtung ist in der Lage, eine axial ausgerichtete Druckkraft zwischen ihrer ersten Seite und ihrer zweiten Seite aufzubringen. Die erste Seite der Federeinrichtung greift beispielsweise an einer Trägerwelle und/oder an einem Adapter zur Anbindung an eine Bewegungseinrichtung an. Die Trägerwelle bzw. der Adapter ist zumindest in einer Richtung axial fixiert in Bezug zur ersten Oberfläche, also unverschieblich dazu angeordnet. Die zweite Seite der Federeinrichtung greift an der zweiten Oberfläche, an dem Werkzeugträger oder an einem mit einem dieser Bauteile verbundenen Element an. Verbunden bedeutet, dass das Element zumindest in einer Richtung axial fixiert in Bezug zum Werkzeugträger bzw. zur ersten Oberfläche ist. Auf diese Weise kann die Federeinrichtung die beiden Oberflächen aneinanderdrücken. Dies ermöglicht eine sichere und reproduzierbare Oszillation unabhängig von Ausrichtung und Vorschubgeschwindigkeit des Fräswerkzeugs.

In einer Ausgestaltung weist das Fräswerkzeug eine Einstelleinrichtung zur Einstellung einer durch die Federeinrichtung ausgeübten Federkraft auf. Insbesondere umfasst die Einstelleinrichtung eine Sicherungseinrichtung wie beispielsweise eine Sicherungsmutter zur Sicherung einer eingestellten Position.

Die Einstelleinrichtung kann die Position einer Seite der Federeinrichtung beeinflussen und somit die Federkraft bzw. den durch die Federeinrichtung ausgeübten Anpressdruck einstellen. Diese Position kann durch die Sicherungseinrichtung gesichert werden. Insbesondere dient die Einstelleinrichtung als Lager der Federeinrichtung, an welchem die erste Seite der Federeinrichtung angreift. In diesem Fall kann die Einstelleinrichtung in ihrer axialen Position in Bezug zur Trägerwelle fixiert werden.

Die Einstelleinrichtung kann aus der Sicherungseinrichtung und einem entsprechenden Gegenlager bestehen, an dem die Sicherungseinrichtung angreift. Bei einer Sicherungsmutter kann dies beispielsweise ein an der Trägerwelle befindliches Gewinde sein.

Diese Ausgestaltung ermöglicht eine Einstellung der Oszillation, so dass diese in Abhängigkeit vom zu entfernenden Rohr, beispielsweise von dessen Material, Festigkeit, Abmessungen etc. gewählt werden kann. Dies verbessert die Entfernung des Rohrs im Erdreich.

In einer weiteren Ausgestaltung weist das Fräswerkzeug ein zwecks Austauschs demontierbares Verschleißteil auf. Das Verschleißteil ist als Federkraftaufnahmeeinrichtung zur Aufnahme einer Federkraft der Federeinrichtung ausgestaltet. Dabei ist die Federkraftaufnahmeeinrichtung in zumindest einer axialen Richtung in Bezug zum Werkzeugträger fixiert, so dass die Federkraft der Federeinrichtung von der Federkraftaufnahmeeinrichtung auf den Werkzeugträger übertragen wird. Alternativ oder ergänzend ist das Verschleißteil als Gleitelement mit einer Gleitfläche ausgestaltet. Dabei ist das Gleitelement in axialer Richtung in Bezug zum Werkzeugträger fixiert und die Gleitfläche dient zum Gleiten auf einer mit der Anschlusseinrichtung verbundenen Fläche bei der oszillierenden Bewegung.

Mit anderen Worten ist die Federkraftaufnahmeeinrichtung mit dem Werkzeugträger gekoppelt. Dieser ist wiederum in zumindest einer axialen Richtung in Bezug zu einer der Oberflächen fixiert. Die Federkraftaufnahmeeinrichtung dient als Lager bzw. Angriffspunkt, an welchem die zweite Seite der Federeinrichtung angreift.

Die mit der Anschlusseinrichtung verbundene Fläche ist insbesondere eine radial ausgerichtete Oberfläche der Trägerwelle. Das Gleitelement dient somit als auf Seite des Werkzeugträgers befindlicher Teil eines Linearlagers zwischen dem Werkzeugträger und der Trägerwelle. Durch die Relativbewegung erzeugter Verschleiß betrifft somit das Verschleißteil und nicht den Werkzeugträger. Hierbei ist das Gleitelement in beiden axialen Richtungen am Werkzeugträger fixiert.

Das Verschleißteil ist austauschbar. Somit kann es, wenn sie durch die oszillierenden Bewegungen und die damit verbundenen Krafteinwirkungen der Federeinrichtung und/oder die Reibung an der Gleitfläche verschlissen ist, ausgetauscht werden. Dies verhindert, dass der wesentlich aufwändiger herzustellende Werkzeugträger ausgetauscht werden muss.

Insbesondere ist das Verschleißteil als Buchse ausgeführt. Es kann beispielsweise aus Messing hergestellt sein. Es kann insbesondere sowohl als Federkraftaufnahmeeinrichtung als auch als Gleitelement dienen. Typischerweise ist das Verschleißteil mit der Trägerwelle verzahnt, beispielsweise mittels einer Keilverzahnung. Eine zuverlässige Übertragung des Drehmoments gelingt so mit geringem technischen Aufwand.

In einer Ausgestaltung weist der Zentrierkopf zumindest einen und insbesondere mehrere in Umfangsrichtung verteilte erste Auslässe für Spülflüssigkeit auf.

Insbesondere sind die ersten Auslässe als Düsen für Spülwasser ausgestaltet. Der Zentrierkopf, die Anschlusseinrichtung sowie die Bewegungseinrichtung weisen insbesondere einen innen liegenden zentralen Kanal zur Zuleitung der Spülflüssigkeit auf. Insbesondere ist die Trägerwelle als Hohlwelle ausgeführt. Der zentrale Kanal des Zentrierkopfes kann für jeden ersten Auslass eine Öffnung aufweisen. An jeden ersten Auslass schließt sich ein Zuleitungskanal an, der zu einer jeweiligen Öffnung führt. Spülflüssigkeit wird vom zentralen Kanal in die Zuleitungskanäle und somit zu den damit verbundenen ersten Auslässen geleitet. Die ersten Ausläse können in unterschiedlichen Winkeln in Bezug zur Längsachse ausgerichtet sein.

Die Anschlusseinrichtung umfasst insbesondere einen Anschluss für einen Kanal zur Zuleitung von Spülflüssigkeit und einen zentralen Kanal zur Durchführung der Spülflüssigkeit. Die Spülflüssigkeit spült bei bestimmungsgemäßem Betrieb die gelösten Späne entlang der Vorschubrichtung durch das Rohr, so dass sie abtransportiert werden können. Dies ermöglicht eine weiter verbesserte Entfernung des Rohrs.

In einer Ausgestaltung weist der Werkzeugträger zumindest einen und insbesondere mehrere in Umfangsrichtung verteilte zweite Auslässe für Spülflüssigkeit auf. Insbesondere sind die zweiten Auslässe derart angeordnet, dass austretende Spülflüssigkeit mit zumindest einer Komponente ihrer Fließrichtung entlang der Vorschubrichtung fließt. Die zweiten Auslässe sind beispielsweise in einem Winkel zwischen 20° und 80° zur Längsachse ausgerichtet.

Die Trägerwelle kann nach radial außen weisende Löcher aufweisen, um die Spülflüssigkeit von einem zentralen Kanal zu den zweiten Auslässen zu leiten. Die Löcher sind insbesondere als Langlöcher ausgestaltet, um trotz der oszillierenden axialen Relativbewegung zwischen Werkzeugträger und Trägerwelle den Durchfluss der Spülflüssigkeit zu ermöglichen. In der Trägerwelle können nach radial außen verlaufenden Kanäle angeordnet sein, die ebenfalls die Form der Langlöcher aufweisen können und somit als Langlochkanäle bezeichnet werden können. Diese verbinden den zentralen Kanal der Trägerwelle mit den im Verschleißteil oder Werkzeugträger befindlichen Zuleitungskanälen zu den zweiten Auslässen. Auch die zweiten Auslässe können als Düsen ausgestaltet sein.

Die zweiten Auslässe weisen demnach nach vorn und sind insbesondere schräg zur Vorschubrichtung ausgerichtet. Untersuchungen haben gezeigt, dass dies einen verbesserten Abfluss der Spülflüssigkeit und einen verbesserten Abtransport der Späne ermöglicht.

Ein zweiter Aspekt der Erfindung ist eine Fräseinheit zum Entfernen eines im Erdreich verlegten Rohrs. Diese umfasst ein erfindungsgemäßes Fräswerkzeug sowie eine mit der Anschlusseinrichtung des Fräswerkzeugs verbundene oder verbindbare Bewegungseinrichtung. Die Bewegungseinrichtung ist zur Vorwärtsbewegung des Fräswerkzeugs entlang einer Vorschubrichtung eingerichtet. Insbesondere ist sie auch zur Rotation der Anschlusseinrichtung zwecks Rotation des Werkzeugträgers eingerichtet.

Die in Bezug zum eingangs erwähnten Aspekt der Erfindung genannten Merkmale, Vorteile und Ausgestaltungen gelten ebenso für diesen Aspekt.

Die Vorschubrichtung verläuft insbesondere entlang des zu entfernenden Rohrs. Die Bewegungseinrichtung kann beispielsweise ein angetriebenes Bohrgestänge sein. Sie kann eine Vorschubeinrichtung zum Vorschieben des Fräswerkzeugs oder eine Zugeinrichtung zum Ziehen des Fräswerkzeugs sein.

Die Anschlusseinrichtung ist mit dem Werkzeugträger drehfest verbunden, insbesondere über die Trägerwelle. Die Anschlusseinrichtung ist darüber hinaus so beschaffen, dass diese mit einer Bewegungseinrichtung wie beispielsweise einem Horizontal-Bohrgerät verbunden werden kann. Über die Anschlusseinrichtung kann der Werkzeugträger angetrieben werden, beispielsweise mithilfe eines Horizontal-Bohrgeräts. Vorzugsweise weist die Anschlusseinrichtung ein von außen zugängliches Gewinde zum Anschluss an die Bewegungseinrichtung auf. Diese Ausgestaltung kann dazu dienen, das Fräswerkzeug ohne großen Aufwand austauschen zu können. Diese Ausgestaltung kann außerdem dazu dienen, das Fräswerkzeug austauschen zu können, um ein Fräswerkzeug mit geändertem Durchmesser einsetzen zu können, um so eine einfache Anpassung an den Außendurchmesser von Rohren zu ermöglichen.

Ein dritter Aspekt der Erfindung ist eine Fräseinrichtung zum Entfernen eines im Erdreich verlegten Rohrs. Diese umfasst ein Fräswerkzeug mit einem um eine Längsachse des Fräswerkzeugs drehbaren Werkzeugträger. An dem Werkzeugträger ist zumindest ein Fräselement zum Zerkleinern des Rohrs angebracht. Das Fräswerkzeug umfasst weiterhin eine Anschlusseinrichtung zum mechanischen Anschluss des Fräswerkzeugs an eine Bewegungseinrichtung. Die Fräseinrichtung umfasst weiterhin die Bewegungseinrichtung zur Vorwärtsbewegung des Fräswerkzeugs sowie zur Drehung des Werkzeugträgers. Insbesondere kann die Bewegungseinrichtung zur Drehung des gesamten Fräswerkzeugs eingerichtet sein. Die Fräseinrichtung ist dazu eingerichtet, den Werkzeugträger oszillierend axial zu bewegen. Auf diese Weise kann der Werkzeugträger im Inneren des Rohrs oszillieren.

Die in Bezug zum eingangs erwähnten Aspekt der Erfindung genannten Merkmale, Vorteile und Ausgestaltungen gelten ebenso für diesen Aspekt.

Die Fräseinrichtung kann dazu eingerichtet sein, das gesamte Fräswerkzeug und damit auch den Werkzeugträger oszillierend axial zu bewegen. In einer Ausführungsform ist die Bewegungseinrichtung dazu eingerichtet, oszillierende Bewegungen entlang der Längsachse auszuführen, so dass das an die Bewegungseinrichtung angeschlossene Fräswerkzeug im Inneren des Rohrs in oszillierende Bewegung versetzt werden kann. Insbesondere umfasst die Bewegungseinrichtung eine Oszillationseinheit zur Versetzung des Fräswerkzeugs in oszillierende Bewegungen.

In einer anderen Ausführungsform weist das Fräswerkzeug eine Oszillationseinrichtung auf, die dazu eingerichtet ist, oszillierende axiale Relativbewegungen des Werkzeugträgers sowie insbesondere der Anschlusseinrichtung in Bezug zu einem zur drehfesten Positionierung im Rohr dienenden Zentrierkopf des Fräswerkzeugs zu erzeugen. Zwischen der Anschlusseinrichtung und dem Zentrierkopf auftretende rotatorische Relativbewegung wird somit in die oszillierende Bewegung des Werkzeugträgers in Bezug zum Zentrierkopf umgewandelt. In dieser Ausführungsform kann die Bewegungseinrichtung ein Ausgleichelement zum Ausgleich der oszillierenden axialen Bewegung aufweisen, um eine an die Bewegungseinrichtung angeschlossene bzw. von dieser umfasste Antriebseinrichtung zum rotatorischen Antrieb des Werkzeugträgers von den oszillierenden Bewegungen zu entkoppeln.

Ein vierter Aspekt der Erfindung ist ein Verfahren zum Entfernen eines im Erdreich verlegten Rohrs. Es wird ein um eine Längsachse drehbarer Werkzeugträger mit zumindest einem am Werkzeugträger angebrachten Fräselement zum Zerkleinern des Rohrs in und/oder am Rohr positioniert. Der Werkzeugträger wird um seine Längsachse gedreht. Es werden oszillierende axiale Bewegungen des Werkzeugträgers in Bezug zum Rohr realisiert.

Die in Bezug zum eingangs erwähnten Aspekt der Erfindung genannten Merkmale, Vorteile und Ausgestaltungen gelten ebenso für diesen Aspekt.

Insbesondere erfolgen die oszillierenden Bewegungen zeitgleich mit der Drehung um die Längsachse. Der Werkzeugträger kann Teil eines erfindungsgemäßen Fräswerkzeugs oder einer erfindungsgemäßen Fräseinrichtung sein.

Der Fräskopf rotiert vorzugsweise mit 60 bis 150 Umdrehungen pro Minute. Der Vorschub kann 3 m bis 9 m pro Stunde betragen, insbesondere etwa 150 mm pro Minute. In einer Stunde können also bis zu 9 m Rohr entfernt werden. Die oszillierende axiale Bewegung bzw. der Rückschlag kann eine Strecke zwischen 2 mm und 20 mm, insbesondere zwischen 6 mm und 8 mm umfassen.

Nachfolgend wird die Erfindung auch anhand von Figuren näher erläutert. Der Schutzbereich der Ansprüche ist nicht auf die gezeigten Ausführungsbeispiele beschränkt. Den Figuren sind weitere vorteilhafte Ausgestaltungen sowie Wirkungen der Erfindung zu entnehmen.

Es zeigen
- Figur 1:: eine perspektivische Darstellung eines Fräswerkzeugs;
- Figur 2:: eine perspektivische Darstellung des Fräswerkzeugs aus Figur 1 bei der Durchführung eines erfindungsgemäßen Verfahrensschritts;
- Figur 3:: eine Seitenansicht eines Fräswerkzeugs; und
- Figur 4:: eine Schnittzeichnung eines Fräswerkzeugs.

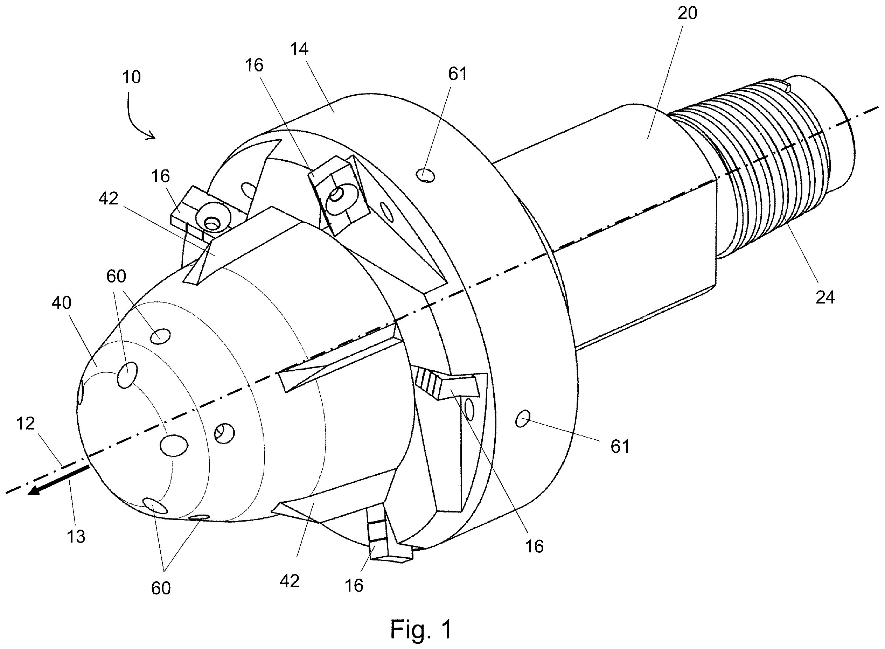

Figur 1 zeigt ein Fräswerkzeug 10 zum Entfernen eines im Erdreich verlegten Rohrs. Es umfasst einen Werkzeugträger 14, der auch als Messerträger bezeichnet wird. Der Werkzeugträger 14 ist im Wesentlichen kreiszylindrisch geformt und um die Längsachse 12 des Fräswerkzeugs 10, die seiner eigenen Längsachse entspricht, drehbar. Am Werkzeugträger 14 sind über den Umfang verteilt fünf Fräselemente 16 angebracht. Die Fräselemente 16 sind lösbar mit dem Werkzeugträger 14 verbunden, so dass sie auf einfache Weise ersetzt werden können.

Die Fräselemente 16 zerkleinern bei der Rotation des Werkzeugträgers 14 im Inneren des Rohrs (hier nicht dargestellt) das Rohr, in dem sie es zerspanen. Das Fräswerkzeug 10 vollführt beim bestimmungsgemäßen Betrieb eine lineare Bewegung entlang der Vorschubrichtung 13 und entfernt auf diese Weise Stück für Stück das Rohr.

Das Fräswerkzeug 10 weist eine Anschlusseinrichtung auf, an welche ein Adapter 20 angeschlossen ist. Die Anschlusseinrichtung ist hier nicht sichtbar, da sie durch den Adapter 20 verdeckt wird. Der Adapter 20 dient der mechanischen Verbindung des Fräswerkzeugs 10 mit einer Bewegungseinrichtung, beispielsweise einem rotierend angetriebenen Bohrgestänge, welche das Fräswerkzeug 10 entlang der Vorschubrichtung 13 nach vorn schiebt und dabei die Anschlusseinrichtung und den mit dieser drehfest verbundenen Werkzeugträger 14 dreht. Zur mechanischen Verbindung mit der Bewegungseinrichtung weist der Adapter 20 an seinem hinteren Ende ein Außengewinde 24 auf.

Das Fräswerkzeug 10 weist weiterhin einen in Vorschubrichtung 13 vorn befindlichen Zentrierkopf 40 auf, der drehfest im Rohr positionierbar ist. Zu diesem Zweck ist er drehbar in Bezug zur Anschlusseinrichtung sowie zum Werkzeugträger 14 angeordnet. Er weist über den Umfang verteilte Leitelemente 42 auf, welche sich in das zu entfernenden Rohr einschneiden. Die Leitelemente 42 sind parallel zur Längsachse 12 ausgerichtet. Durch seinen nach hinten hin zunehmenden Durchmesser erreicht der Zentrierkopf 40 die Zentrierung des gesamten Fräswerkzeugs 10 im Rohr, so dass die Fräselemente 16 während des Betriebs gleichmäßig belastet sind.

Im Zentrierkopf 40 sind mehrere in Umfangsrichtung verteilte erste Auslässe 60 angeordnet, die einem Ausströmen von Spülflüssigkeit, insbesondere Spülwasser, dienen. Beim Betrieb des Fräswerkzeugs 10 werden auf diese Weise abgetrennte Späne des zu entfernenden Rohrs entlang der Vorschubrichtung 13 weggespült. Die ersten Auslässe 60 weisen nach vorn und sind in zwei in Bezug zur Vorschubrichtung 13 hintereinander befindlichen Reihen angeordnet. Die ersten Auslässe 60 der vorn befindlichen ersten Reihe sind in einem anderen Winkel angeordnet als die ersten Auslässe der zweiten Reihe, nämlich in einem kleineren Winkel in Bezug zur Längsachse 12. Auf diese Weise wird der Abtransport verbessert.

Am Werkzeugträger 14 sind mehrere in Umfangsrichtung verteilte zweite Auslässe 61 angeordnet, die im Wesentlichen demselben Zweck dienen wie die ersten Auslässe 60. Die zweiten Auslässe 61 weisen nach vorn, so dass ausströmende Spülflüssigkeit mit einer Komponente ihrer Fließrichtung entlang der Vorschubrichtung 13 fließt. Sie sind in einem Winkel von etwa 45° zu Längsachse 12 ausgerichtet.

Das Fräswerkzeug 10 umfasst weiterhin eine hier nicht dargestellte Oszillationseinrichtung zur Realisierung oszillierender Bewegungen des Werkzeugträgers 14 entlang der Längsachse 12. Auf diese Weise werden besonders feine Späne erzeugt, die einfach und störungsfrei abtransportiert werden können.

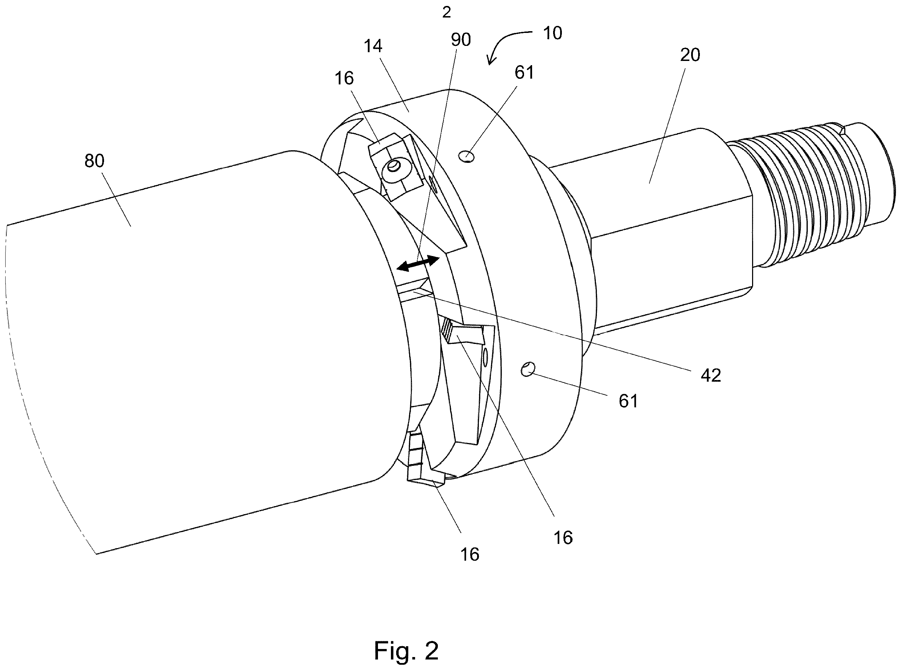

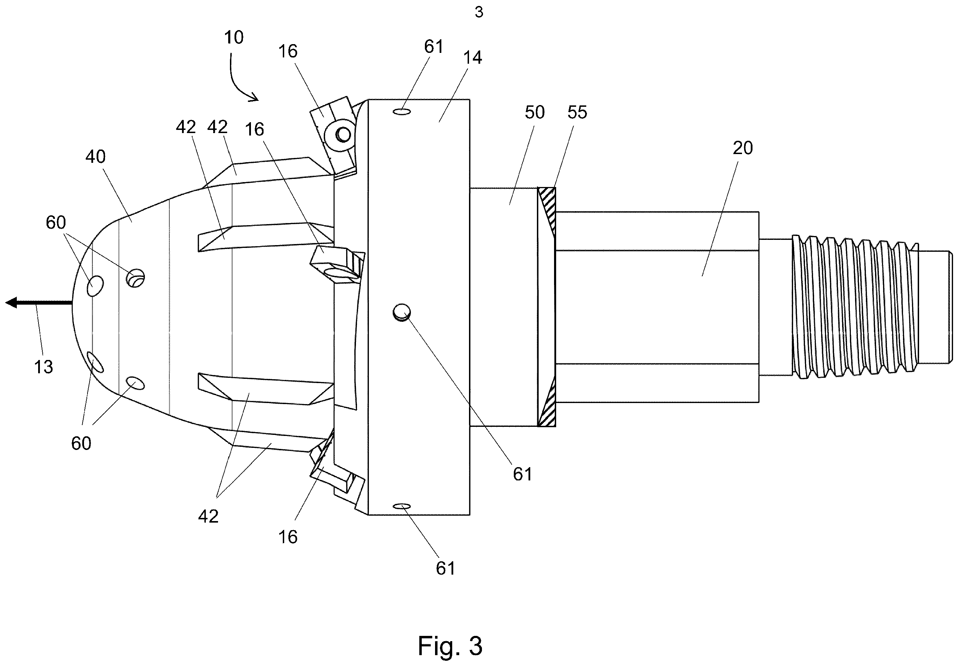

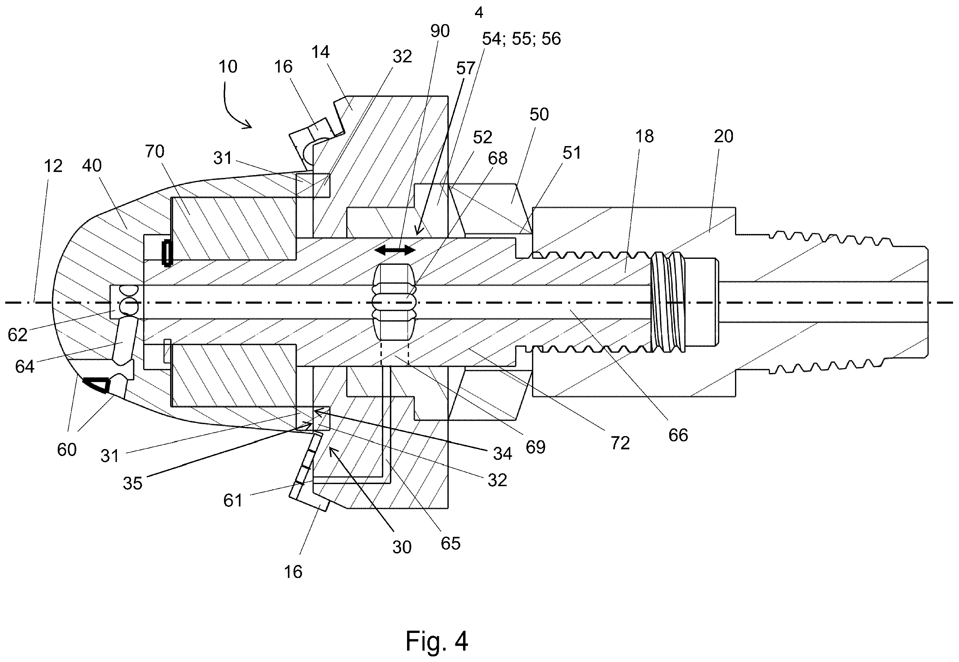

In Figur 2 ist das Fräswerkzeug 10 der Figur 1 bei der Durchführung des erfindungsgemäßen Verfahrens dargestellt. Der Zentrierkopf befindet sich im Wesentlichen vollständig im Inneren des Rohrs 80, lediglich rückwärtige Bereiche der Leitelemente 42 sind noch sichtbar. Das Fräswerkzeug 10 ist im bzw. am Rohr 80 positioniert. In dieser Ausführungsform des Verfahrens weist der Werkzeugträger 14 einen größeren Außendurchmesser auf als das Rohr 80, so dass das Rohr 80 vollständig entfernt werden kann. Ebenso überragt der Außendurchmesser des Werkzeugträgers 14 den Außendurchmesser des Zentrierkopfes inklusive der Leitelemente 42, so dass die Fräselemente 16 stirnseitig am zu entfernenden Rohr angreifen. Beispielsweise weist das Rohr 80 einen Außendurchmesser von 110 mm auf. Insbesondere ist die Größe des Fräswerkzeugs 10 dieselbe wie die der Fräswerkzeuge der Figuren 3 und 4. Alternativ oder zusätzlich können die Fräselemente zum Zerkleinern des Rohrs von innen nach außen eingerichtet sein.

Die oszillierende axiale Bewegung 90 ist schematisch mit einem Doppelpfeil dargestellt. Im hier gezeigten Ausführungsbeispiel weist sie eine Hublänge von 6 bis 8 mm auf.

Figur 3 zeigt eine Seitenansicht eines erfindungsgemäßen Fräswerkzeugs 10. Zur Vermeidung von Doppelungen wird auf die Beschreibung der oben bereits erwähnten Gegenstände und Merkmale verzichtet und insofern auf die obigen Abschnitte verwiesen.

Hinter dem Werkzeugträger 40 befindet sich eine Federeinrichtung 50. Diese dient dem Aneinanderdrücken zweier sich kontaktierender Oberflächen, die in der Schnittzeichnung der Figur 4 dargestellt sind. Insofern wird auf die entsprechende Beschreibung verwiesen. Die Federeinrichtung 50 übt eine nach vorn, also entlang der Vorschubrichtung 13, gerichtete axiale Druckkraft auf den Werkzeugträger 14 aus. In rückwärtiger Richtung ist sie an einer Federkraftaufnahmeeinrichtung 55 gelagert. Diese umfasst eine Sicherungsmutter, welche mittels eines entsprechenden Gewindes in unterschiedlichen axialen Positionen in Bezug zur Anschlusseinrichtung sowie zum Zentrierkopf 40 befestigt werden kann. Das Gegengewinde, in welches das Gewinde der Sicherungsmutter eingreift, ist an einer innenliegenden Trägerwelle ausgebildet.

Durch gezielte Positionierung der Sicherungsmutter kann mittels der Federkraftaufnahmeeinrichtung 55 die Größe der ausgeübten Federkraft eingestellt werden. Die Federeinrichtung 50 weist im Inneren des dargestellten Gehäuses angeordnete Federelemente auf.

Figur 4 zeigt einen Längsschnitt durch ein erfindungsgemäßes Fräswerkzeug 10. Auch hier wird auf Doppelungen verzichtet und für die nicht explizit bezeichneten Merkmale auf die obigen Abschnitte verwiesen.

Das Fräswerkzeug 10 umfasst eine seinem radial Inneren verlaufende Trägerwelle 72, die an ihrem rückwärtigen Abschnitt die Anschlusseinrichtung 18 ausbildet. Mit anderen Worten ist die Anschlusseinrichtung 18 als rückwärtiger axialer Abschnitt einer zentral im Fräswerkzeug entlang der Längsachse verlaufenden Trägerwelle 72 ausgebildet. Nach vorn hin verläuft die Trägerwelle 72 durch die Federeinrichtung 50 und den Werkzeugträger 14, bevor sie mittels des zweireihigen Lagers 70 rotatorisch am Zentrierkopf 40 gelagert ist.

Die Trägerwelle 72 ist abschnittsweise als Keilwelle ausgeführt und bildet auf diese Weise eine drehfeste Verbindung mit der abschnittsweise als Keilnabe ausgeführten radialen Innenseite des Werkzeugträgers 14 aus. In der hier gezeigten Ausführungsform sind Keilwelle und Keilnabe 5-fach verzahnt.

In axialer Richtung sind Trägerwelle 72 und Werkzeugträger 14 allerdings gegeneinander verschieblich angeordnet, um die oszillierende axiale Bewegung 90 des Werkzeugträgers zu realisieren. Die zu diesem Zweck angeordnete Oszillationseinrichtung 30 umfasst zwei einander kontaktierende, kreisringförmige Oberflächen 34 und 35. Diese sind so geformt, dass sie in Abhängigkeit der relativen Drehposition zwischen einander unterschiedliche axiale Positionen zwischen einander aufweisen. Im hier gezeigten Ausführungsbeispiel sind sie jeweils mit radial angeordneten Sägezahnprofilen versehen. Die erste Oberfläche 34 ist entgegen der Vorschubrichtung 13 ausgerichtet und an einer ersten Schlagscheibe 31 angeordnet, die fest mit dem Zentrierkopf 40 verbunden ist. Die zweite Oberfläche 35 ist entlang der Vorschubrichtung 13 ausgerichtet und an einer zweiten Schlagscheibe 32 angeordnet, die wiederum fest mit dem Werkzeugträger 14 verbunden ist.

Durch die mittels der Bewegungseinrichtung angetriebene Rotation der Trägerwelle 72 und damit des Werkzeugträgers 14 bei gleichzeitiger drehfester Anordnung des Zentrierkopfes 40 im zu entfernenden Rohr erfolgt nun eine relative Rotation der beiden Oberflächen 34, 35. Diese führt zu den oszillierenden axialen Bewegungen 90 des Werkzeugträgers 14 in Bezug zum Zentrierkopf 40 sowie zur Anschlusseinrichtung 18. Die hier dargestellte Position des Wechselträgers 14 ist eine vordere Position, so dass der Werkzeugträger 14 bei fortschreitender Drehung zunächst entgegen der Vorschubrichtung bewegt wird. Gelangt er seine rückwärtige Position, wird er mittels der Federeinrichtung 50 entlang der Vorschubrichtung 13 nach vorn gedrückt und anschließend durch die beiden Oberflächen 34, 35 erneut nach hinten geschoben.

Im radial Inneren des Werkzeugträgers 14 ist weiterhin das Verschleißteil 54 angeordnet, welches in axialer Richtung in Bezug zum Werkzeugträger 14 fixiert ist. Das Verschleißteil 54 ist auf einfache Weise demontierbar und austauschbar. Es ist ebenfalls als Keilnabe ausgeführt und somit drehfest in Bezug zur Trägerwelle 72.

Zum einen ist das Verschleißteil 54 als Federkraftaufnahmeeinrichtung 55 ausgestaltet und dazu eingerichtet, die nach vorn wirkende Druckkraft der Federeinrichtung 50 aufzunehmen. Zum anderen ist das Verschleißteil 54 als Gleitelement 56 ausgestaltet. Es weist an seiner radialen Oberfläche die Gleitfläche 57 auf, die während der oszillierenden Bewegung 90 auf der Trägerwelle 72 hin und her bewegt wird. Beide Funktionen haben den Zweck, den aufwendig herzustellenden Werkzeugträger 14 vor mechanischer Beanspruchung zu schützen und auf diese Weise dessen Lebensdauer zu erhöhen.

Die Federeinrichtung 50 übt eine axial ausgerichtete Druckkraft zwischen ihrer an der Trägerwelle 72 befestigten ersten Seite 51 und ihrer an der Federkraftaufnahmeeinrichtung 55 angreifenden zweiten Seite 52 aus.

Die Trägerwelle 72 ist als Hohlwelle ausgeführt. Der in ihrem Inneren angeordnete zentrale Kanal 66 dient der Zuführung von Spülwasser zu den ersten Auslässen 60 sowie den zweiten Auslässen 61. Im vorderen Bereich mündet er in einen zentralen Kanal 62 des Zentrierkopfes 40, den er mit Spülwasser speist. In diesem sind Löcher angeordnet, welche mit Zuleitungskanälen 64 verbunden sind. Diese speisen wiederum die im Zentrierkopf 40 angeordneten ersten Auslässe 60.

Zur Speisung der am Werkzeugträger 14 befindlichen zweiten Auslässe 61 sind an der radialen Außenseite der Trägerwelle 72 Langlöcher 68 und entsprechend geformte Langlochkanäle 69 angeordnet. Im Bereich der Keilverzahnung zwischen Trägerwelle 72 und Verschleißteil 54 sind diese gestrichelt dargestellt. Die Langlochkanäle 69 münden in Zuleitungskanäle 65, die ein Kreisquerschnitt aufweisen und durch das Verschleißteil 54 sowie den Werkzeugträger 14 in radialer Richtung nach außen verlaufen. Bei der oszillierenden Bewegung 90 ist somit in jeder Position sichergestellt, dass aus dem zentralen Kanal 66 strömendes Spülwasser in die Zuleitungskanäle 65 und die damit verbundenen zweiten Auslässe 61 gelangen kann. In der hier gezeigten Ausführungsform weisen die zweiten Auslässe 61 parallel zur Längsachse 12 nach vorn.

**Bezugszeichenliste**

| | |
|---|---|
| Fräswerkzeug | 10 |
| Längsachse | 12 |
| Vorschubrichtung | 13 |
| Werkzeugträger | 14 |
| Fräselement | 16 |
| Anschlusseinrichtung | 18 |
| Adapter | 20 |
| Außengewinde | 24 |
| Oszillationseinrichtung | 30 |
| Erste Schlagscheibe | 31 |
| Zweite Schlagscheibe | 32 |
| Erste Oberfläche | 34 |
| Zweite Oberfläche | 35 |
| Zentrierkopf | 40 |
| Leitelement | 42 |
| Federeinrichtung | 50 |
| Erste Seite | 51 |
| Zweite Seite | 52 |
| Verschleißteil | 54 |
| Federkraftaufnahmeeinrichtung | 55 |
| Gleitelement | 56 |
| Gleitfläche | 57 |
| Erster Auslass | 60 |
| Zweiter Auslass | 61 |
| Zentraler Kanal | 62 |
| Zuleitungskanal | 64 |
| Zuleitungskanal | 65 |
| Zentraler Kanal | 66 |
| Langloch | 68 |
| Langlochkanal | 69 |
| Lager | 70 |
| Trägerwelle | 72 |
| Rohr | 80 |
| Bewegung | 90 |

## Patentansprüche

1. Fräswerkzeug (10) zum Entfernen eines im Erdreich verlegten Rohrs (80), umfassend einen um eine Längsachse (12) des Fräswerkzeugs (10) drehbaren Werkzeugträger (14) mit zumindest einem am Werkzeugträger (14) angebrachten Fräselement (16) zum Zerkleinern des Rohrs (80), eine Anschlusseinrichtung (18) zum mechanischen Anschluss des Fräswerkzeugs (10) an eine Bewegungseinrichtung sowie eine Oszillationseinrichtung (30) zur Realisierung oszillierender axialer Bewegungen (90) des Werkzeugträgers (14) in Bezug zur Anschlusseinrichtung (18), wobei das Fräswerkzeug (10) einen Zentrierkopf (40) zur drehfesten Positionierung im Rohr (80) aufweist und der Werkzeugträger (14) in Bezug zum Zentrierkopf (40) drehbar ist, wobei der Zentrierkopf (40) Leitelemente (42) aufweist.

2. Fräswerkzeug (10) nach dem vorhergehenden Anspruch, wobei die Anschlusseinrichtung (18) zum drehfesten Anschluss des Werkzeugträgers (14) an die Bewegungseinrichtung eingerichtet ist.

3. Fräswerkzeug (10) nach einem der vorhergehenden Ansprüche, wobei der Werkzeugträger (14) axial verschieblich in Bezug zum Zentrierkopf (40) angeordnet ist und die Oszillationseinrichtung (30) dazu eingerichtet ist, aus einer rotatorischen Relativbewegung zwischen dem Werkzeugträger (14) und dem Zentrierkopf (40) die oszillierende Bewegung (90) des Werkzeugträgers (14) in Bezug zum Zentrierkopf (40) zu erzeugen.

4. Fräswerkzeug (10) nach einem der vorherigen Ansprüche, wobei die Oszillationseinrichtung (30) zwei einander kontaktierende Oberflächen (34, 35) aufweist, die so ausgebildet sind, dass sich eine relative axiale Position der beiden Oberflächen (34, 35) zueinander in Abhängigkeit einer relativen Drehposition der beiden Oberflächen (34, 35) einstellt.

5. Fräswerkzeug (10) nach dem vorhergehenden Anspruch, wobei das Fräswerkzeug (10) eine Federeinrichtung (50) zum Aneinanderdrücken der beiden Oberflächen (34, 35) aufweist.

6. Fräswerkzeug (10) nach dem vorhergehenden Anspruch, wobei das Fräswerkzeug (10) eine Einstelleinrichtung zur Einstellung einer durch die Federeinrichtung (50) ausgeübten Federkraft aufweist.

7. Fräswerkzeug (10) nach dem vorhergehenden Anspruch, wobei die Einstelleinrichtung eine Sicherungseinrichtung wie beispielsweise eine Sicherungsmutter zur Sicherung einer eingestellten Position umfasst.

8. Fräswerkzeug (10) nach einem der drei vorherigen Ansprüche, wobei das Fräswerkzeug (10) ein zwecks Austauschs demontierbares Verschleißteil (54) aufweist, wobei das Verschleißteil (54)
- als Federkraftaufnahmeeinrichtung (55) zur Aufnahme einer Federkraft der Federeinrichtung (50) ausgestaltet ist, wobei die Federkraftaufnahmeeinrichtung (55) in zumindest einer axialen Richtung in Bezug zum Werkzeugträger (14) fixiert ist, so dass die Federkraft der Federeinrichtung (50) von der Federkraftaufnahmeeinrichtung (55) auf den Werkzeugträger (14) übertragen wird, und/oder
- als Gleitelement (56) mit einer Gleitfläche (57) ausgestaltet ist, wobei das Gleitelement (56) in axialer Richtung in Bezug zum Werkzeugträger (14) fixiert ist und die Gleitfläche (57) zum Gleiten auf einer mit der Anschlusseinrichtung (18) verbundenen Fläche bei der oszillierenden Bewegung (90) dient.

9. Fräswerkzeug (10) nach einem der vorhergehenden Ansprüche, wobei der Zentrierkopf (40) zumindest einen und insbesondere mehrere in Umfangsrichtung verteilte erste Auslässe (60) für Spülflüssigkeit aufweist,
wobei insbesondere mehrere erste Auslässe (60) in unterschiedlichen Winkeln in Bezug zur Längsachse (12) angeordnet sind.

10. Fräswerkzeug (10) nach einem der vorhergehenden Ansprüche, wobei der Werkzeugträger (14) zumindest einen und insbesondere mehrere in Umfangsrichtung verteilte zweite Auslässe (61) für Spülflüssigkeit aufweist,
wobei die zweiten Auslässe (61) insbesondere derart angeordnet sind, dass austretende Spülflüssigkeit mit zumindest einer Komponente ihrer Fließrichtung entlang der Vorschubrichtung (13) fließt, wobei die zweiten Auslässe (61) beispielsweise in einem Winkel zwischen 20° und 80° zur Längsachse (12) ausgerichtet sind.

11. Fräseinheit zum Entfernen eines im Erdreich verlegten Rohrs (80), umfassend ein Fräswerkzeug (10) nach einem der vorhergehenden Ansprüche sowie eine mit der Anschlusseinrichtung (18) des Fräswerkzeugs (10) verbundene oder verbindbare Bewegungseinrichtung, die zur Vorwärtsbewegung des Fräswerkzeugs (10) entlang einer Vorschubrichtung (13) und insbesondere zur Rotation der Anschlusseinrichtung (18) zwecks Rotation des Werkzeugträgers (14) eingerichtet ist.

12. Fräseinrichtung zum Entfernen eines im Erdreich verlegten Rohrs (80), umfassend
- ein Fräswerkzeug (10) nach einem der Ansprüche 1 bis 10, sowie
- die Bewegungseinrichtung zur Vorwärtsbewegung des Fräswerkzeugs (10) sowie zur Drehung des Werkzeugträgers (14),
wobei die Fräseinrichtung dazu eingerichtet ist, den Werkzeugträger (14) des Fräswerkzeugs (10) oszillierend axial zu bewegen.

13. Verfahren zum Entfernen eines im Erdreich verlegten Rohrs (80) unter Verwendung eines Fräswerkzeugs (10) nach einem der Ansprüche 1 bis 10, bei dem der um die Längsachse (12) drehbare Werkzeugträger (14) mit zumindest einem am Werkzeugträger (14) angebrachten Fräselement (16) zum Zerkleinern des Rohrs (80) im und/oder am Rohr (80) positioniert wird, um seine Längsachse (12) gedreht wird und oszillierende axiale Bewegungen (90) des Werkzeugträgers (14) in Bezug zum Rohr (80) realisiert werden.

## Claims

1. Milling tool (10) for removing a pipe (80) laid in the ground, comprising a tool carrier (14) rotatable about a longitudinal axis (12) of the milling tool (10) with at least one milling element (16) attached to the tool carrier (14) for chopping the pipe (80), a connection device (18) for mechanically connecting the milling tool (10) to a movement device, and an oscillation device (30) for producing oscillating axial movements (90) of the tool carrier (14) relative to the connection device (18), wherein the milling tool (10) has a centering head (40) for rotationally fixed positioning in the pipe (80) and the tool carrier (14) is rotatable relative to the centering head (40), wherein the centering head (40) has guide elements (42).

2. Milling tool (10) according to the preceding claim, wherein the connection device (18) is configured to connect the tool carrier (14) to the movement device in a rotationally fixed manner.

3. Milling tool (10) according to one of the preceding claims, wherein the tool carrier (14) is arranged to be axially displaceable relative to the centering head (40) and the oscillation device (30) is configured to generate the oscillating movement (90) of the tool carrier (14) relative to the centering head (40) from a relative rotational movement between the tool carrier (14) and the centering head (40).

4. Milling tool (10) according to one of the preceding claims, wherein the oscillation device (30) has two surfaces (34, 35) contacting each other which are designed such that a relative axial position of the two surfaces (34, 35) relative to each other is adjusted as a function of a relative rotational position of the two surfaces (34, 35).

5. Milling tool (10) according to the preceding claim, wherein the milling tool (10) comprises a spring device (50) for pressing the two surfaces (34, 35) together.

6. Milling tool (10) according to the preceding claim, wherein the milling tool (10) has an adjustment device for adjusting a spring force exerted by the spring device (50).

7. Milling tool (10) according to the preceding claim, wherein the adjustment device comprises a safety device, such as a lock nut, for securing an adjusted position.

8. Milling tool (10) according to one of the three preceding claims, wherein the milling tool (10) has a wear part (54) that can be removed for replacement, wherein the wear part (54)
- is designed as a spring force receiving means (55) for receiving a spring force of the spring device (50), wherein the spring force receiving means (55) is fixed in at least one axial direction relative to the tool carrier (14), so that the spring force of the spring device (50) is transmitted from the spring force receiving means (55) to the tool carrier (14), and/or
- is designed as a sliding element (56) with a sliding surface (57), wherein the sliding element (56) is fixed in the axial direction relative to the tool carrier (14) and the sliding surface (57) serves to slide on a surface connected to the connection device (18) during the oscillating movement (90).

9. Milling tool (10) according to one of the preceding claims, wherein the centering head (40) has at least one and in particular several first outlets (60) for flushing fluid distributed in the circumferential direction,
wherein in particular several first outlets (60) are arranged at different angles with respect to the longitudinal axis (12).

10. Milling tool (10) according to one of the preceding claims, wherein the tool carrier (14) has at least one and, in particular, several second outlets (61) for flushing fluid distributed in the circumferential direction,
wherein the second outlets (61) are arranged in particular such that escaping flushing fluid flows with at least one component of its flow direction along the feed direction (13), wherein the second outlets (61) are aligned, for example, at an angle between 20° and 80° to the longitudinal axis (12).

11. Milling unit for removing a pipe (80) laid in the ground, comprising a milling tool (10) according to one of the preceding claims and a movement device connected or connectable to the connection device (18) of the milling tool (10), which is configured for forward movement of the milling tool (10) along a feed direction (13) and, in particular, for rotating the connection device (18) in order to rotate the tool carrier (14).

12. Milling device for removing a pipe (80) laid in the ground, comprising
- a milling tool (10) according to one of claims 1 to 10, and
- the movement device for moving the milling tool (10) forward and for rotating the tool carrier (14),
wherein the milling device is configured to move the tool carrier (14) of the milling tool (10) axially in an oscillating manner.

13. Method for removing a pipe (80) laid in the ground using a milling tool (10) according to one of claims 1 to 10, in which the tool carrier (14), which is rotatable about the longitudinal axis (12), with at least one milling element (16) attached to the tool carrier (14) for chopping the pipe (80) is positioned in and/or at the pipe (80), is rotated about its longitudinal axis (12), and oscillating axial movements (90) of the tool carrier (14) are performed in relation to the pipe (80).

## Revendications

1. Outil de fraisage (10) pour l'élimination d'un tuyau (80) posé dans le sol, comprenant un porte-outil (14), tournable autour d'un axe longitudinal (12) de l'outil de fraisage (10), avec au moins un élément de fraisage (16) fixé au porte-outil (14) pour le broyage du tuyau (80), un dispositif de raccordement (18) pour le raccordement mécanique de l'outil de fraisage (10) à un dispositif de mouvement, ainsi qu'un dispositif d'oscillation (30) pour la réalisation des mouvements axiaux oscillants (90) du porte-outil (14) par rapport au dispositif de raccordement (18), dans lequel l'outil de fraisage (10) comporte une tête de centrage (40) pour le positionnement fixe en rotation dans le tube (80) et le porte-outil (14) est tournable par rapport à la tête de centrage (40), dans lequel la tête de centrage (40) comporte des éléments de guidage (42).

2. Outil de fraisage (10), selon la revendication précédente, dans lequel le dispositif de raccordement (18) est configuré pour le raccordement solidaire, en rotation, du porte-outil (14) au dispositif de mouvement.

3. Outil de fraisage (10), selon l'une des revendications précédentes, dans lequel le porte-outil (14) est disposé de manière à pouvoir se déplacer axialement par rapport à la tête de centrage (40), et le dispositif d'oscillation (30) est configuré pour générer, à partir d'un mouvement relatif rotatif entre le porte-outil (14) et la tête de centrage (40), le mouvement oscillant (90) du porte-outil (14) par rapport à la tête de centrage (40).

4. Outil de fraisage (10), selon l'une des revendications précédentes, dans lequel le dispositif d'oscillation (30) comporte deux surfaces (34, 35) en contact l'une avec l'autre, qui sont conçues de telle sorte qu'une position axiale relative des deux surfaces (34, 35) l'une par rapport à l'autre s'ajuste en fonction d'une position de rotation relative des deux surfaces (34, 35).

5. Outil de fraisage (10), selon la revendication précédente, dans lequel l'outil de fraisage (10) comporte un dispositif à ressort (50) pour presser les deux surfaces (34, 35) l'une contre l'autre.

6. Outil de fraisage (10), selon la revendication précédente, dans lequel l'outil de fraisage (10) comporte un dispositif d'ajustement pour ajuster une force du ressort exercée par le dispositif à ressort (50).

7. Outil de fraisage (10), selon la revendication précédente, dans lequel le dispositif d'ajustement comprend un dispositif de sécurisation, tel qu'un écrou de sécurisation, pour la sécurisation d'une position ajustée.

8. Outil de fraisage (10) selon l'une des trois revendications précédentes, dans lequel l'outil de fraisage (10) comporte une pièce d'usure (54) démontable dans le but de remplacement, dans lequel la pièce d'usure (54)
- est conçue comme dispositif de réception de force du ressort (55) pour la réception d'une force du ressort du dispositif à ressort (50), dans lequel le dispositif de réception de force du ressort (55) est fixé dans au moins un sens axial par rapport au porte-outil (14), de sorte que la force du ressort du dispositif à ressort (50) est transmise par le dispositif de réception de force du ressort (55) au porte-outil (14), et/ou
- est conçue comme élément coulissant (56) avec une surface coulissante (57), dans lequel l'élément coulissant (56) est fixé dans le sens axial par rapport au porte-outil (14) et la surface coulissante (57) sert au coulissement sur une surface reliée au dispositif de raccordement (18) lors du mouvement oscillant (90).

9. Outil de fraisage (10), selon l'une des revendications précédentes, dans lequel la tête de centrage (40) comporte au moins une, et en particulier plusieurs, premières sorties (60) pour du liquide de rinçage, réparties dans le sens circonférentiel,
dans lequel plusieurs premières sorties (60) sont en particulier disposées selon des angles différents par rapport à l'axe longitudinal (12).

10. Outil de fraisage (10), selon l'une des revendications précédentes, dans lequel le porte-outil (14) comporte au moins une et en particulier plusieurs secondes sorties (61), réparties dans le sens circonférentiel, pour du liquide de rinçage, dans lequel les deuxièmes sorties (61) sont en particulier disposées de telle sorte que du liquide de rinçage sortant s'écoule avec au moins une composante de son sens d'écoulement le long d'un sens d'avance (13), dans lequel les deuxièmes sorties (61) sont par exemple orientées selon un angle compris entre 20° et 80° par rapport à l'axe longitudinal (12).

11. Unité de fraisage pour l'élimination d'un tuyau (80) posé dans le sol, comprenant un outil de fraisage (10) selon l'une des revendications précédentes, ainsi qu'un dispositif de mouvement relié ou pouvant être relié au dispositif de raccordement (18) de l'outil de fraisage (10), qui est configuré pour le mouvement en avance de l'outil de fraisage (10) le long d'un sens d'avance (13) et, en particulier, pour la rotation du dispositif de raccordement (18) dans le but de rotation du porte-outil (14).

12. Dispositif de fraisage pour l'élimination d'un tuyau (80) posé dans le sol, comprenant
- un outil de fraisage (10) selon l'une des revendications 1 à 10, ainsi que
- le dispositif de mouvement pour le mouvement en avance de l'outil de fraisage (10) ainsi que pour la rotation du porte-outil (14),
dans lequel le dispositif de fraisage est configuré pour déplacer le porte-outil (14) de l'outil de fraisage (10) de manière axiale oscillante.

13. Procédé pour l'élimination d'un tuyau (80) posé dans le sol à l'aide d'un outil de fraisage (10), selon l'une des revendications 1 à 10, dans lequel le porte-outil (14), tournable autour de l'axe longitudinal (12), avec au moins un élément de fraisage (16) fixé au porte-outil (14), est positionné dans et/ou sur le tuyau (80) pour broyer le tuyau (80), est tourné autour de son axe longitudinal (12), et des mouvements axiaux oscillants (90) du porte-outil (14) par rapport au tuyau (80) sont réalisés.
